(19) Europäisches Patentamt
European Patent Office
Office européen des brevets

(11) **EP 4 231 247 A1**

(12) **EUROPEAN PATENT APPLICATION**
published in accordance with Art. 153(4) EPC

(43) Date of publication:
**23.08.2023 Bulletin 2023/34**

(21) Application number: **20800227.9**

(22) Date of filing: **13.10.2020**

(51) International Patent Classification (IPC):
**G06T 19/20** (2011.01)    **G06T 17/00** (2006.01)

(52) Cooperative Patent Classification (CPC):
**G06T 19/20; G06T 17/00;** G06T 2210/16

(86) International application number:
**PCT/ES2020/070617**

(87) International publication number:
**WO 2022/079324 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Seddi, Inc.**
  **New York, NY 10016 (US)**

• **Desilico S.L.**
  **28007 Madrid (ES)**

(72) Inventors:
• **CIRIO, Gabriel**
  **28007 Madrid (ES)**
• **RODRIGUEZ, Alejandro**
  **28007 Madrid (ES)**

(74) Representative: **Clarke, Modet y Cía., S.L.**
  **C/ Suero de Quiñones 34-36**
  **28002 Madrid (ES)**

(54) **MODELING TRUE SEAMS IN VIRTUAL GARMENT APPLICATIONS**

(57)    According to various embodiments, a method and system is provided to model geometric properties of garments taking into account the effects of the seams that are created to make the garment for use in computer modeling applications. All the seams in a garment, including overlapping seams and asymetric seamlines, are processed based on geometric operations on 2D models of pieces of fabric from patterns. Working in 2D simplifies folding and stitching. A set of parametric spaces are used to enforce continuity along and across seams. A set of constrained optimizations in 2D and 3D are used to guarantee spacial continuity. Geometries produced can be simulated, providing clothing representations where the mechanical and appearance properties of multi-layer seams are derived automatically by applying geometrical operations and physically-based simulation to fabric pieces.

FIG. 3

EP 4 231 247 A1

**Description**

**BACKGROUND**

This disclosure generally relates to computer modeling systems, and more specifically to a system and method for modeling properties of garments taking into account the effects of the seams that are created to make the garment for use in visual computing, engineering, and design applications.

In computer modeling applications, like for example, computer graphics, the accurate and life-like modeling of garments and other similar fabric-made objects has been a long-standing goal, and a key component for realistic animations in video games, films, and other computer-modeling applications.

Garments and other objects made of cloth or fabrics are typically assembled from cut pieces of the fabric put together through stiching, creating seams between the fabric pieces. Seams are centerpiece in the assembly process because they define the interface between the fabric pieces. In a real garment, seams play a major role in the way a fabric behaves and looks, including its drape, elastic properties, durability, style, and appearance. Yet, so far, in computer modeling applications, seams are largely ignored, treating them as mere junctions between pieces in the simplest possible way. In general, seams are thought of the area around shared edges between piece boundaries, using constraints or shared degrees of freedom, and a specific bending energy at these boundary hinges. In current garement modeling applications, the stiffness of this boundry bending energy remains arbitrary, unless specifically captured for the specific type of seam and fabric combination, commonly ignoring stitching influence. Existing approaches that naively model seams present a complex combinatorial problem. Seams imply tighly packing together narrow regions of fabric with many folds, layers and stitches, without creating interpenetrations or self-collisions, with minimal stretching or compression of the fabric, and producing a geometric output that is able to be simulated. It is very common to find overlapping seams that involve more than 10 layers of fabric stacked on top of each other. For example, even a simple garment (e.g. a t-shirt) can have a single piece of fabric undergo three or more different seaming operations, for example in the armpit region, meaning that this region will be folded 3 times onto itself and onto other pieces of fabric, and each fold can be stitched with one of many different types of stiching, resulting in many different possible combinations.

Some approaches to modeling aspects of seams have been attempted before. For example, in textile engineering applications, Hu et al. [Hu et al. 1997] examined the effect of seams on drapability. Masteikaite [Masteikaite 1997] showed an interdependence of fabric bending stiffness and stitch type. Schenk et al. [Schenk et al. 2006] studied the influence of seams on the bending stiffness of the surrounding fabric. Hu and Chung [Hu and Chung 2000] studied the bending properties of fabric strips with vertical plain seams. In their study, fabric thickness, seam thickness, distance of the neutral axis from the surface of the cross section, and seam allowance width determined the bending behavior of such a strip. Chung [Chung 1999] presented a review of studies on drape, both static and dynamic, on both unseamed and seamed fabrics and investigated the effect of seam allowance, type and position on woven fabric drape. She found that bending length increased with the insertion of a vertical seam, while drape coefficient increased with the addition of radial seams, increasing the seam allowance having little effect. The highest drape coefficient occurred with the circular seam located just out of the pedestal. The bending rigidity of textiles can be measured using different approaches, such as the Kawabata Evaluation System of Fabrics(KES-FB) [Kawabatra 1980] or the manual cantilever method [Peirce 1930].

In some simulation applications, Yang [Yang 2014] studied drape of fabrics under different seams in different positions, using bending and draping experiments. The FEM model to replicate different drape modeled seams as a single layer but changes stiffness and mass to account for multiple layers. Roland et al. [Roland et al. 2015] described different stitch types simulated to see structural and breakage effect on different fabrics. They modeled cloth fabric using two-dimentional (2D) fem elements and threads using one-dimensional (1D) elements. In mechanical engineering applications, an important seam feature has been identified as seam puckering, that is, when two pieces of fabric are joined by a seam and thread is stretched, then wrinkles appear near the seam line. For example, Inui et al. [Inui et al. 2001] examined how seam puckering is related to the mechanical properties of the fabrics and how it can be simulated. However, the focus of this study was the effect of the fabric on the appearance of the seam, similar to [Hu et al. 2006], which also models fabric fold and stitching explicitly, and simulates the resulting geometry. Provot [Provot 1995] described the use of springs for fabric and threads in what he termed the Provot's mass-spring system. It compares three seam types (3.05.01, 2.02.03, and 2.04.06) and one stitch type (lockstitch) with different amounts of shrinkage after sewing using real photos. However, this study was limited to two pieces of fabric joining at a flat, straight, symmetrical seam which is a trivial problem. For example, the study of this trivial seam doesn't expose to complexity of multiple stacked seams, arbitrary or asymmetric seams, etc. Mousazadegan et al. [Mousazadegan et al. 2012] simulated fabric using FEM elements to model pucker formation under sewing thread tension, but did not model threads: instead it applied forces along the seamline simulating the effect of puckering. Simulation results are compared with experimental pucker profiles.

Similarly, some approaches in computer simulation applications, have studied seams as joint edges. For example, Montes et al. [Montes et al. 2020] used specific energy at seam edges to simulate tensile stiffening due to seams. But this similation was limited to tensile stiffening only and did not include simulation of bending. Similarly, Pabst et al. [Pabst et al. 2008] described the capture of bending stiffness of three seam types compared to no seam scenarios. This study applies a scaling factor to a custom bending energy that increases bending stiffness depending on the distance to the seamline. This simulation increased the mass of the nodes to account for different fabric layers in the seam and used mesh refinement around seams to allow smooth stiffness transition. This study showed some evidence of effects of seams in garment draping but does not provide a robust modeling of the garments accounting for the impact of seams. Other approaches have modeled seams as fabric folding. For example, Ma et al. [Ma et al. 2006] provides an extension of the Hu et al. work [Hu et al. 2006] but for whole garments. The Ma study presented remeshing to increase resolution around seams and showed draping in complete garments. However, this approach suffers from same limitations as the original Hu et al. paper, lacking multiple overlapping seams and asymetric seams. Moreover, in overlapping seams, only one of the seams is treated as a geometric seam while the other overlapping seam is simply treated as joint edges.

Thus, what is needed is a system and method to model geometric properties of garments taking into account the effects of the seams that are created to make the garment for use in visual computing, design, and engineering applications addressing the deficiencies of the prior art.

## BRIEF SUMMARY

According to various embodiments of the present invention, systems and methods for computer-based modeling of a garment are provided. In one embodiment, a method includes receiving input model data for the garment comprising seam data and geometry data that describe the physical properties of the garment. The seam data may include data describing the physical construction of seams to be used in assembling the garment. The method further comprises processing the geometry data based on the seam data by mapping the seam data into geometric operations applied to the geometry data and generating three-dimensional geometry data corresponding to a simulation of the garment. The generated three-dimensional geometry data represents the seams on the garment and the effects of the seams on a drape of the simulated garment. The method then simulates the garment in a computer system based on the generated three-dimensional geometry data.

In embodiments, the geometry data describing the physical properties of the garment can also include a representation of a plurality of fabric panels including seam allowance sections. In addition, the seam data can also include a seam type and a stitch type for at least one seam to be used in assembling the garment.

According to embodiments, the geometric operations can include an optimization operation. For example, in some embodiments, the optimization operation can include an optimization of 2-dimensional geometry data representative of a set of fabric panels in the geometry data describing the physical properties of the garment. The optimization of the 2-dimensional geometry data can simulate the stretching of a first fabric panel along a first seamline to match a corresponding second seamline in a second fabric panel that is longer than the first seamline. In embodiments, the optimization operation can alternatively or in addition also include an optimization of 2-dimensional geometry data representative of a normal line in a fabric seam allowance section of a fabric panel that is perpendicular to a seamline in the fabric panel so as to prevent the normal line from crossing a second normal line in the fabric seam allowance section of the fabric panel.

According to embodiments, the geometric operations can include a procedural geometric transformation applied to the geometry data based on each of the seams to be used in assemblig the garment. For example, in some embodiments, the procedural geometric transformations canb be applied to the geometry data based on a seam order specified in the seam data. In embodiments, the geometric operations can include a transformation of geometry data for at least one seamline of a pair of adjoining fabric panels based on a seam type identified in the seam data. In some embodiments, the geometric operations can also include a transformation of the geometry data for the seamline of the pair of adjoining fabric panels based on a stitch type identified in the seam data.

In one embodiment, a method for computer-based modeling of a garment includes receiving input model data for a garment. The input model data includes seam data and geometry data describing the physical properties of the garment. In this embodiment, the geometry data includes a representation of a plurality of fabric panels including seam allowance sections and the seam data includes a seam type and a stitch type for each seam to be used in assembling the plurality of panels to generate the garment. The method further includes processing the geometry data based on the seam data based on a set of geometric operations applied to the geometry data for the plurality of fabric panels to produce garment model representations comprising seams made of modeled layers of fabric material from the seam allowance areas folded and stitched based on the seam type and the stitch type in the seam data. The method also includes generating three-dimensional geometry data based on the garment model representations and simulating the garment on a computer system based on the generated three-dimensional geometry data. For example, the simulation may be for visual compuating, design, or engineering applications.

**BRIEF DESCRIPTION OF THE SEVERAL VIEWS OF THE DRAWINGS**

FIG. 1A is a diagram that illustrates a computer model of a garment in 2D.

FIG. 1B is a diagram that illustrates a computer model of a garment in 3D.

FIG. 2A is a diagram that illustrates 2D geometries of a garment model with seam allowances in fabric pieces according to embodiments.

FIG. 2B is a diagram that illustrates 3D geometries of a garment model with seam allowances and a seam according to embodiments.

FIG. 3 is a flow chart that illustrates a method for modeling seams in a garment according to embodiments.

FIG. 4 is a diagram that illustrates a parametric seam space according to embodiments.

FIG. 5A and 5B are diagrams that illustrate seam space optimization of normals according to embodiments.

FIG. 6 is a diagram that illustrates a seam profile in a fabric piece geometry according to embodiments.

FIG. 7 is a table that illustrates seam types and seam profiles of different thicknesses according to embodiments.

FIG. 8 is a diagram that illustrates multi-chunk optimization of seam normals according to embodiments.

FIG. 9A is a diagram that illustrates pattern space geometries of fabric panels with asymmetric seamline segments according to embodiments.

FIG. 9B is a diagram that illustrates the pattern space geometries of fabric panels in FIG. 9A after pattern space optimizations according to embodiments.

The figures depict various example embodiments of the present disclosure for purposes of illustration only. One of ordinary skill in the art will readily recognize form the following discussion that other example embodiments based on alternative structures and methods may be implemented without departing from the principles of this disclosure and which are encompassed within the scope of this disclosure.

**DETAILED DESCRIPTION**

The above and other needs are met by the disclosed methods, a non-transitory computer-readable storage medium storing executable code, and systems for modeling geometric properties of garments taking into account the effects of the seams that are created to make the garment for use modeling of garments and other fabric-made objects in computer modeling applications, including, for example, garment design and virtual modeling, motion capture applications, biomechanics and ergonomics design and simulation, education, business, virtual and augmented reality shopping, and entertainment applications, including animation and computer graphics for digital movies, interactive gaming and videos, human, animal, or character simulations, virtual and augmented reality applications, robotics, computer vision, classification and recognition applications, and the like.

The Figures and the following description describe certain embodiments by way of illustration only. One of ordinary skill in the art will readily recognize from the following description that alternative embodiments of the structures and methods illustrated herein may be employed without departing from the principles described herein. Reference will now be made in detail to several embodiments, examples of which are illustrated in the accompanying figures.

According to the various embodiments described herein, a method and system is provided to model geometric properties of garments taking into account the effects of the seams that are created to make the garment for use in computer modeling applications. Geometries produced according to embodiments can be simulated, providing clothing representations where the mechanical and appearance properties of multi-layer seams are derived automatically by applying geometrical operations and physically-based simulation to fabric pieces. In one embodiment, all the seams in a garment, including overlapping seams and asymetric seamlines, are processed. In embodiments, a system and method operates on 2D models of pieces of fabric from patterns instead of three-dimensional (3D) modeling information, thus working in a configuration that is controlled, not the product of an arbitrary 3D simulation, undeformed, without stretch or bending forces, and intersection-free, flat and not intersecting each other. Working in 2D simplifies folding and stitching. According to embodiments, a set of parametric spaces are used to enforce continuity along and across seams. In addition, folding and stitching geometric procedures are greatly simplified. In some embodiments, a set of constrained optimizations in 2D and 3D are used to guarantee spacial continuity. Using such approaches, systems and methods according to embodiments of this disclosure provide the capability to model seams in a predictive way without the need of additional capture or fitting processes.

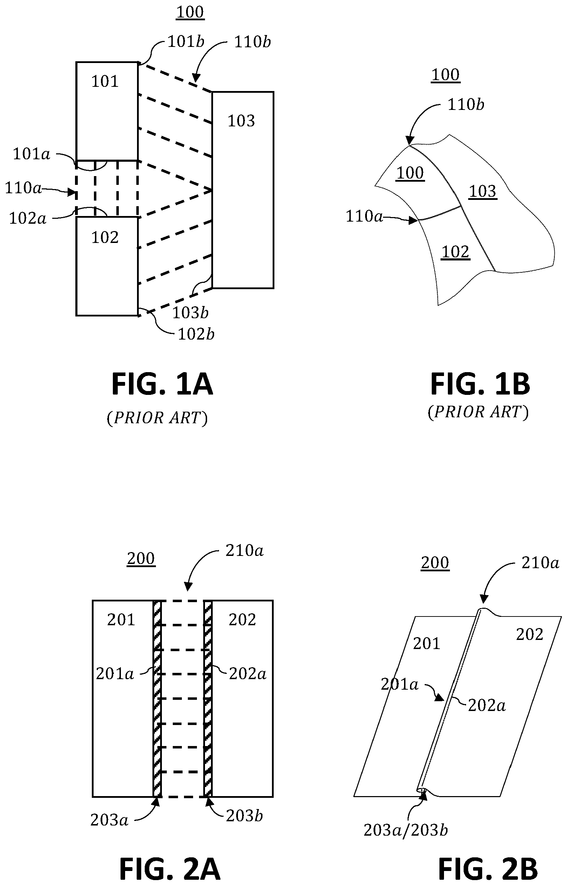

Now referring to FIG. 1A, a typical computer model of a garment 100 is illustrated. In general, a garment is composed of one or more pieces following a pattern made by a pattern maker. A computer model of a garment 100 typically defines the pieces 101, 102, 103, etc. in a 2D setting. For example, FIG. 1B illustrates this 2D setting, sometimes referred to as pattern space. Each piece 101, 102, 103 has a specific shape, size and position in this space. Since in the real world these pieces are cut out from fabric rolls, geometry in pattern space also encodes the rest shape of each piece. A seamline groups together different piece edges (or sections of them) into one side of a seam. Seams can then be defined by linking together two seamlines, which are then brought together during the assembly and simulation. A seamline can be as simple as one piece edge, as for example illustrated by seamline 101a or seamline 102a that make up seam 110a in FIG. 1A, or can be made of several disconnected edge sections of one or more pieces that were previously sewn, which we can be referred to as chunks. For example, in FIG. 1A, chunk 101b and chunk 102b make one seamline of seam 110b.

Now referring to FIG. 1B, an illustration of a typical 3D world-space representation of a simulated garment 100 is shown. During the virtual assembly and simulation of a garment 100, the pieces 101, 102, 103 are typically discretized as triangle meshes, paying special care to have a matching number of segments on both seamlines of every seam. For example, seamlines 101a and 102a provide a matching number of segments on both sides of seam 110a and a seamline made up segment 101b and segment 102b on one side and the seamline made of longer segment 103b on the other provide a matching number of segments on both sides of seam 110b. Therefore, each seamline is a sequence of seamline segments and each segment has a corresponding segment on the other seamline of the seam. As illustrated in FIG. 1B, the simulation takes place in world-space, where all pairs of seamline segments, 101a and 102a for seam 110a and 101b-102b and 103b for seam 110b, overlap each other to give the garment 100 its final shape.

While the above descriptions generally correspond to how most commercial CAD garment software currently in use operates, this approach drastically simplifies the real sewing process of garments and neglects several important aspects of real seams. In reality, two pieces of fabric are sewn through their seam allowance, an extra amount of fabric that is added after each seamline. For example, FIG. 2A illustrates a 2D pattern-space representation of a computer model of a garment 200 according to embodiments of this disclosure. Garment 200 includes two fabric panels 201 and 202. Each panel includes a seamline 201a and 202a that define seam 210a. Each panel also includes a seam allowance 203a and 203b specifically allows fabric folding and stitching at the seam 210a without consuming fabric intended for the garment 200. Referring now to FIG. 2B, a 3-D world space representation of garment 200 is shown according to embodiments. As illustrated, to perform a seam 210a, seamlines on both sides of the seam 201a and 202a are overlapped, both seam allowances 203a and 203b are folded onto each other following the seam type, and then stitched together along the seamlines following the specified stitch type. In general, along the seam refers to the direction parallel to the seam, while across the seam refers to the direction of seamline normals, i.e. from one side of the seam to the other.

The folds, overlaps, stitching threads and amounts of seam allowance are precisely what gives each seam its particular properties, with different seam and stitch types used for different purposes. There are many types of seams which may be used for different purposes by the garment designer. By way of non-limiting examples, some seam types include: Plain seam, Plain seam with a single stitch, Plain seam with double top stitch, hairline seam, lapped or tucked seam, french seam, flat felled seam or run and fell seam, mock flat fell or welt seam, corded or piped seam, faced seam, hemmed fell seam, mock french seam, serged seam, slot seam, counter seam, butt seam, sheet or linen seam, hand stitched seam, and taped seam. For each seam in a garment, the pattern-space garment model can provide the type of seam required for assembly. Similarly, the garment model can also define the stitch type to be used for each seam. There are also many types of stitches, including for example, chainstitch, lockstitch, blindstitch, zig zag lockstitch, chainstitch, zig zag chainstitch, 2/3/4/5/6 needle coverstitch, 2/3/4 thread overedge stitch, safetystitch, picoetta stitch, pin pick or saddle stitch, blidstitch, and blanketstitch to name a few. In addition to the fabric materials, the types of seams and stitches used to assemble the fabric sections of a garment has a significant impact on the properties of the final garment, including its drape, overall look, and feel.

Another important aspect of garment modeling that is largely ignored in current approaches is the sewing order. According to embodiments of this disclosure, the garment model information can also provide the order in which garment seams should be sewn. The proper sewing order can avoid overlapping seams that could result in uncomfortable and visually noticeable bumps at seam junctions, affecting appearance and feel of the garment. Correctly modeling and simulating seams is therefore paramount to obtain accurate and predictive garment drapings.

Given a computer model of a garment, including its 2D pieces, assembly or seam information, and a rough representation of the final 3D shape of the garment, systems and methods according to this disclosure can produce a simulated geometric output of a mesh or yarns modeling all the seams and stitches of the corresponding real garment. According to embodiments, in the model, the garment's fabric is discretized in 2D pattern-space into nodal information following the outline of pattern pieces, including their extended seam allowances. For example, for yarn-level cloth models, fabric can be discretized as yarns and yarn nodes. For triangle cloth models, fabric can be discretized as triangles and nodal vertices, eventually by remeshing or subdividing pattern pieces. As one of ordinary skill in the art will recognize, the systems and methods according to embodiments of this disclosure can accomodate any kind of fabric discretization approach as long as it produces nodal information.

According to one aspect in some embodiments, the modeled fabric nodes can follow a barycentric representation. For example, each node is deemed to be supported or "claimed" by a pattern piece of fabric, i.e., the node falls inside a piece triangle of the fabric in pattern space. The 2D position of a node can be computed from the position of the vertices of the triangle and a set of barycentric coordinates. According to embodiments, fabric nodes can travel from one piece of fabric to another after being sewn. The node's supporting fabric piece in pattern space can change throughout the sewing process. For example, seam allowance nodes initially fall outside of any triangle, but after sewing they end up being claimed or supported by pattern pieces on either side of the seam as the seam allowance sections of the fabric fold and become part of the garment. Pattern pieces therefore act as support for fabric nodes in pattern space, while the overlapping and folding of fabric can change the supporting piece of a fabric node.

Another aspect of embodiments of this disclosure involves the processing of seams in 2D pattern-space. In some embodiments, a 3D model of the garment in world-space could be used as the primary input to generate the seam modeling data. However, such in embodiments the deformation of the garment due to the seams would be intertwined with the overall draping deformation of the garment, due to both intrinsic and extrinsic factors, making it more difficult to separate the two. Accordingly, in some embodiments of this disclosure, the seam processing takes place directly in pattern-space and elevates the geometry to world-space once all the seams have been processed. Using this approach allows the input geometry to be flat, undeformed, which is particularly true for asymmetric seams and gatherings, or stretched fabrics in general, and intersection-free. It should be noted however, that working in 2D pattern space lacks the advantage of working in 3D space, that is being able to go from one piece of fabric to another through a seam, since piece edges perfectly overlap at seams in 3D world-space. In 2D pattern-space, the fabric pieces are discontinuous and include seam allowances. In order to overcome this drawback, in some embodiments, a novel "seamline-space" is provided to enforce continuity across pieces in pattern-space, so that fabric at piece edges can be easily overlapped and folded.

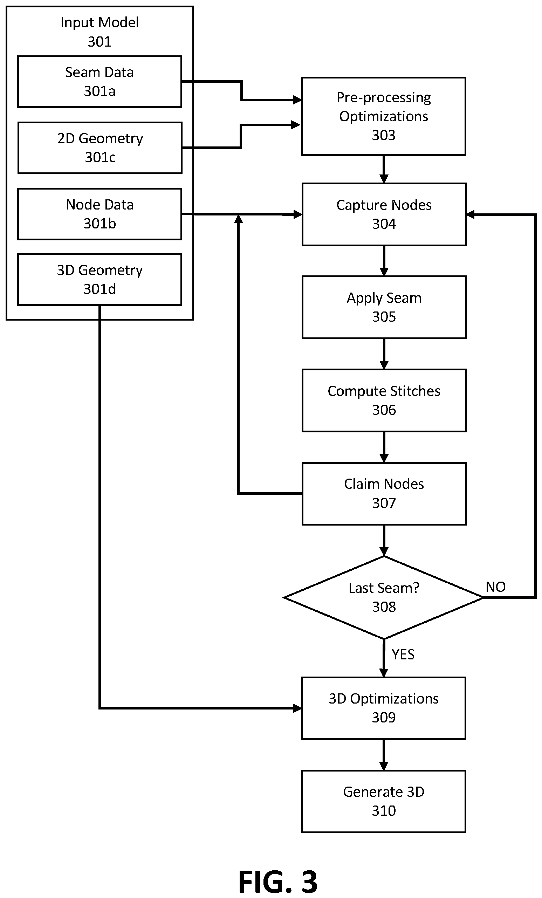

Referring now to FIG. 3, a flow chart illustrating a seam processing method according to embodiments is provided. An input model 301 with a computer-based representation of the item to be modeled, for example a garment or other fabric-made item, is provided as input. The input model 301 includes seam data 301a, such as seam types, stitching types, sewing order, or other assembly information. The input model 301 can also include node data 301b, including for example, a mapping of fabric pieces to claimed nodes. For example, initially, all fabric nodes may be claimed by their respective fabric pieces, including any seam allowance nodes. The input model 301 may also include 2D geometry data 301c and 3D geometry data 301d, including, for example, the pattern-space geometries of all the fabric pieces for the item and the world-space representation of the item in 3D.

According to some embodiments, as an initial pre-processing phase, optimizations to some of the input data, such as the seam data 301a and the 2D geometry data 301c, may be performed 302 in pattern-space to prepare the model for seam processing. Further, seamline-space optimizations may also be performed 303 on these pre-processed inputs, for example to optimize seam normals so as to enforce space continuity prior to seam processing. The seam processing begins with the first seam as identified in the seam data 301a, for example, following the given assembly instructions. For the given seam, all fabric nodes that fall within the seamline area are computed in seamline-space, capturing 304 all fabric nodes that fall within the seamline area. The identified seam is then applied 305 to the captured nodes, folding and deforming the nodes following the seam type. Stitches are computed 306, creating them on the folded geometry according the stitch type. Node claiming is updated 307 in the node data 301b based on the seam processing, since some nodes might now be supported by a different piece after folding. Until the last seam is reached 308, the process 304-308 repeats for each seam in the input model 301 using the updated node data 301b in each iteration. Once all seams are processed, the 1:1 mapping between pieces in pattern-space and pieces in world-space is used to elevate to 3D each fabric node. This process may entail some 3D optimizations 309 and generating 310 the 3D world-space geometry including the deformations due to the seams in the item. For example, barycentric coordinates can be computed on claiming triangles and that position can be mapped to the 3D mesh in the input 3D geometry 301d.

1. Seamline Space and Optimizations

In general, the process of assembly of fabric panels to generate a garment involves the stitching together of the fabric panels according to specific seam types and stitch types in a given order. Accordingly, in the modeling of garment assembly of this disclosure, fabric nodes that are close to the seamlines in the garment model go through significant transformations due to folding and fabric overlap. For each seam, before folding or deforming any geometry, the method involves finding which nodes will be affected by the seam itself, and preparing those nodes for the folding operations. In FIG. 3, this process is identified as node capturing 304. As noted above, in some embodiments a processing aid is used to provide node continuity while working with node data in 2D instead of in 3D. This aid, referred to as "seamline-space" in this disclosure greatly simplifies the capture and manipulation of nodes along and across seams.

According to some embodiments, a seamline-space may be provided to simplify node processing in 2D. For example, where two seamlines of a seam are supposed to overlap in 3D world-space once the mesh garment is fully assembled, they may have very different coordinates in 2D pattern-space, where they do not overlap at all. Each seamline usually belongs to a different piece, and pieces are laid flat in pattern space with some distance between each other to leave room for seam allowances and facilitate cutting. Therefore, at best, a rigid transformation is required to match both seamlines. Oftentimes, however, there is no rigid transformation to align one seamline to the other, such as in the case of asymetric seams, and only an elastic deformation can force them to match. For example, in the physical garment assembly, the seamster would stretch or gather the fabric manually during stitching to force the overlap. Thus, these instances make it particularly difficult to model seams in pattern space; they make it more difficult to fold one seamline onto the other because there is no continuity between both sides of the seam. To overcome these difficulties, in embodimens, a continuous space around each seam is defined that allows navigation along and across the seam, supporting rigid and, more importantly, non-rigid transitions between sides.

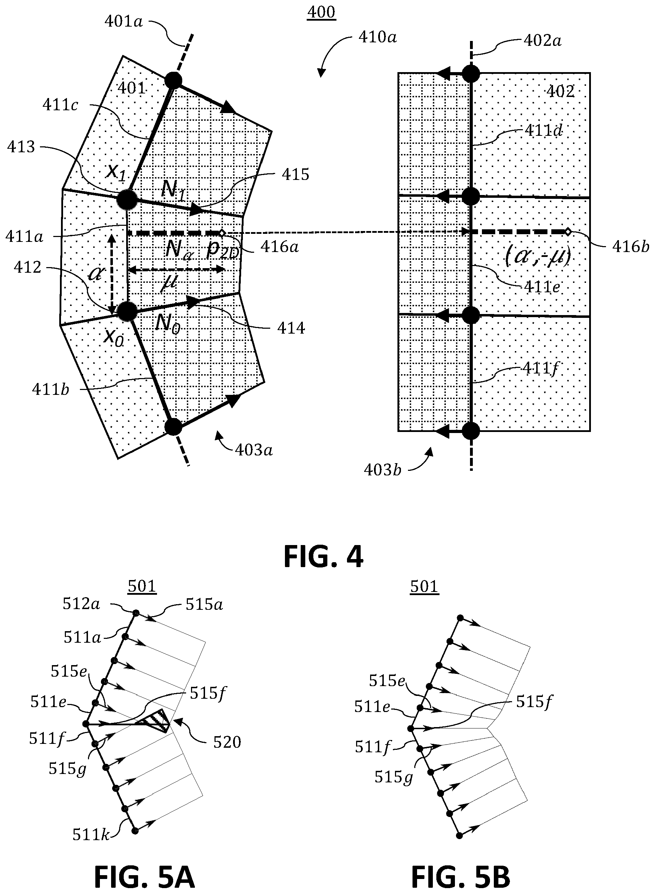

According to these embodiments, a parametric space or seamline-space is defined along the seam. In general, for garment assembly, each segment of a seamline is paired to a segment of the other seamline of the seam, with both segments overlapping in world-space. Referring now to FIG. 4, a geometry of garment model 400 is illustrated according to embodiments. Two pattern pieces 401 and 402 are shown, each having a corresponding seamline 401a and 402b on both sides of seam 410a. Each seamline includes multiple segments 411a-411f. Each segment, e.g., 411a, has endpoints 412 $x_0$ and 413 $x_1$, with respective normals 414 $N_0$ and 415 $N_1$. For a given point 416a $p_{2D}$, a coordinate $\alpha$ is used to parametrize its position $p(\alpha)$ along the seamline segment 411a:

$$p(\alpha) = x0 + \alpha(x1 - x0) \qquad \text{(Equation 1)}$$

Further, to parametrize the space off the seamline, the coordinate $\mu$ is defined as the signed distance to the segment and along the direction of the normal at $\alpha$, $N\alpha$. Then, the point $p_{2D}$ in pattern-space on either side of the segment can be uniquely defined using seamline space coordinates $(\alpha, \mu)$:

$$p_{2D}(\alpha, \mu) = p(\alpha) + \mu N(\alpha) \qquad \text{(Equation 2)}$$

Thus, any point 416 around the entire seam 410a can be uniquely defined using a segment number $i$ corresponding to a segment 411i, which panel 401 or 402 the point may be in as identified by a seam side s, and the seamline space coordinates $(\alpha, \mu)$.

Using this parametric seamline-space, we can navigate on both sides of the seam in a continuous and straightforward way, even if the pieces are different and if the transformation is not rigid. The segments and their respective normals abstract whatever transformation is required to go from one side to the other, allowing the binding together of two different halfspaces. Thus, for example, a point 416a with $(\alpha, \mu)$ coordinates for one seamline segment on one side of the seam becomes point 416b $(\alpha, -\mu)$ on the corresponding seamline segment on the other side of the seam, effectively defining a continuous space across the seam. By ensuring segment normals are continuous along the seams, the resulting parametric space is also continuous along the entire seam.

Accordingly, in these embodiments, a seamline space can be defined by the seamline segments endpoints and their normals. Any point around the seamline can be defined by a segment id and two parameters $\alpha$ and $\mu$, encoding the position along the segment, and the signed offset to the segment along the normal at $\alpha$. Also, any point in a seamline has a direct, bijective mapping to the coupled seamline in the seam. Further, in order to track changes in height due to folds and overlaps defined by the seam types, as further described below, a third coordinate may be added to the seamline space, namely the height $h$, which always follows the out-of-plane direction z.

While this seamline space is continuous across the seam by construction, it is not necessarily continuous along the seam (i.e. from one seamline segment to the next). Since the seamline space is partly defined by the seam normals, continuity along the seam could be provided only in the area around the seam where lines along the direction of the normals do not intersect each other. For example, FIG. 5A illustrates a fabric piece geometric model 501 in which for at least a subset of segments 511e-511f, the corresponding seamsline space seam normals N 515e-515g intersect each other, as illustrated by region 520. As FIG. 5A illustrates, a naive approach to normal computation of the seamline normals can lead to ill-defined areas covered by the space of several segments, due to the intersection of the capture lines along their normals. Thus, this region should be large enough to encompass all the nodes that will be deformed through the seaming process.

Referring back to FIG. 3, in order to provide a seamline space in wich segment normal do not intersect, a seamline optimization process 303, may be provided in some embodiments. This optimization relies on the fact that the perpendicular movement of a vector $v$ rotated $\theta$ radians around a point o is bounded by $\theta \|v\|$. If point o is moved along the tangent direction w to o' a corresponding rotated vector $v'$ can be computed. A maximum rotation rate per unit displacement can be defined as $\|v\|^{-1}$, which can guarantee that $w \cdot ((o' + v') - (o + v)) > 0$. Further, for garment assembly it is desireable to prevent excessive cramming of fabric material in any area. Thus, according to some embodiments, a maximum allowed angle between the normals of two nodes $x_i, x_j$ that belong to a seamline can be defined with a maximum capture distance $\mu_{max}$ as

$$\theta_{max} = 0.5 \frac{\|x_i - x_j\|}{\mu_{max}} \quad \text{(Equation 3)}$$

Accordingly, in some embodiments, a constrain optimization process 303 may be provided in seamline space that is run on seam normals N to prevent their intersection. For each couple of consecutive nodes *j, k,* in the seamline, a $\theta_{max\,jk}$ parameter can be computed, for example according to Equation 3. In addition, normal functions, $f(N) = \text{acos}(N_j \cdot N_k) - \theta_{max\,jk}$ are defined for each couple of consecutive nodes and the functions f(N) are grouped in the set C. The set C is then enforced while deviating as little as possible from the reference normals $\overline{N}$ of the nodes, defined through classic averaging of the normals of incident segments, as follows:

$$\min_{N} \sum_i \|N_i - \overline{N}_i\|^2 \quad \text{(Equation 4)}$$

$$\text{s.t. } f(N) < 0, f(N) \in C$$

Using this approach, a well defined, intersection-free seamline space can be obtained. FIG. 5B illustrates this optimization process showing an optimized version of the fabric piece model of FIG. 5A. With this optimization process the seamline normals can be computed to prevent intersections. As illustrated in FIG. 5B, the seamline normals 515e-515g for segments 511e and 511f no longer intersect after the optimization process.

2. Optimizations for Multi-Chunk Seams

According to some embodiments, seams that joins more than two fabric pieces together are processed as multi-chunk seams. For example, after the model processes two pieces sewn together along a seam, the model can process the resulting assembly for sewning to another piece or to another multi-piece assembly. For example, referring back to FIG. 1A, fabric pieces 101 and 102 may be processed first along seam 110a to generate a multi-chunk assembly that is then processed with fabric piece 103 along seam 110b. This type of operation is present in most garments, such as the sleeve of a t-shirt sewn to the assembled torso, or the waistline seam connecting the assembled top and bottom parts of many dresses. Thus, a seamline will be typically be composed of several chunks belonging to one or more pieces.

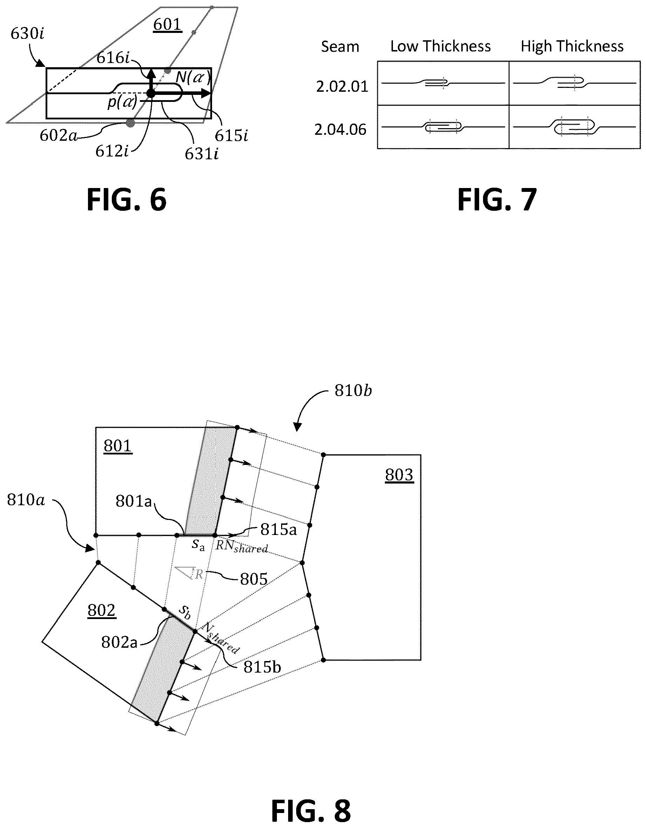

In order to extend the seamline space optimizations to multi-chunk applications, in some embodiments additional optimizations may be provided. For example, referring to FIG. 8, as illustrated by this multi-chunk process, the optimization of multi-chunk seam normals may require the merging of the normals at chunk transitions. A first seam 810a between fabric pieces 801 and 802 may be be first process. The segments 801a and 801b of this Seam 810a connecting both chunks 801 and 802 can be used to compute a rotation R 805 that aligns the two. This rotation 805 is used to act on the proper version of the merged normal by each chunk. Without this optimization, there would be a discontinuity in the transition across chunks, failing to capture and fold the nodes in that area.

Accordingly, in some embodiments, to guarantee continuity and proper definition of the seamline space across chunks, the last normal of one chunk is made to be equal to the first normal of the next chunk. To this end, both normals are treated as a single DoF *Nshared* during the optimization. First, the two segments of the previous seam 810a incident on the current seam 810b are used to compute the rotation R 805 that aligns them, so that $\frac{s_a}{\|s_a\|} = R \frac{s_b}{\|s_b\|}$. During the optimization procedure, $\boldsymbol{N}_{shared}$ may be initialized to $\boldsymbol{N}_{shared} = \frac{N_1 + R^T N_2}{\|N_1 + R^T N_2\|}$, and the constraints involving the shared normal generated by the first and second chunk may be adapted to act on *Nshared* 815b and *RNshared* 815a respectively. FIG. 8 shows these optimized normals once the shared nodes are accounted for. The same procedure may be applied to cyclical seams, where the first normal of the first chunk and the last normal of the last chunk may undergo the same treatment.

3. Node Capturing

Referring back to FIG. 3, another aspect of methods and systems according to embodiments of this disclosure is the node capturing process. In order to capture nodes to include in the subsequent seam modeling process, the node data 301b in the input model 301, as updated by any prior iterations, is analized for all the seamline segments of each seamline for a given seam. Each seamline segment belongs to a single fabric piece. The node capturing process looks for claimed nodes of that piece of fabric that fall inside the segment's bounding region in pattern space. The bounding region of a segment includes the area swiped by the segment when extruded along the endpoint normals by a distance defined by the seam type. Different seam types may require different lengths of fabric. For example, for a given fabric piece there may be two bounding regions: one towards the inside of the piece that captures interior nodes, and one towards the outside of the piece that captures seam allowance nodes.

In some embodiments, a bounding region of a segment can reach across a previous seam, and requires capturing nodes claimed by other pieces. Since the pattern space is not continuous, seamline space of the previous seam can be used to compute the position these "foreign" nodes would have if claimed by the segment's piece, effectively enforcing continuity across previous seams.

According to another aspect of embodiments, if a node falls inside the bounding region of a segment, the nodes $(\alpha, \mu)$ coordinates can be computed from its 2D position $\boldsymbol{p}_{2D}$ in pattern space. As noted above, in seamlien space $\boldsymbol{p}(\alpha)$ is the parametric position along the segment and $\mu$ is the signed displacement from $\boldsymbol{p}(\alpha)$ in the normal direction, $\boldsymbol{N}(\alpha)$. $\boldsymbol{N}(\alpha)$ results from the interpolation of endpoint normals $\boldsymbol{N}_0$ and $\boldsymbol{N}_1$ at $\alpha$:

$$N(\alpha) = \frac{(1-\alpha)\boldsymbol{N}_0 + \alpha\,\boldsymbol{N}_1}{\|(1-\alpha)\boldsymbol{N}_0 + \alpha\,\boldsymbol{N}_1\|} \qquad \text{(Equation 5)}$$

The coordinate $\alpha$ and $\mu$ may be found by solving a nonlinear system. However, it should be noted that in order to solve only for $\alpha$ the normal $\boldsymbol{N}(\alpha)$ at $\boldsymbol{p}(\alpha)$ passes through $\boldsymbol{p}_{2D}$ and is along the direction $\boldsymbol{D} =(1 - \alpha)\boldsymbol{N}_0 + \alpha \boldsymbol{N}_1$. Further, $\boldsymbol{D}$ and $\boldsymbol{p}_{2D} - \boldsymbol{p}(\alpha)$ are colinear and are both a function of $\alpha$. Therefore, the coordinate determination problem can be solved also using the following equation:

$$(1-\alpha)\boldsymbol{N}_0 + \alpha\,\boldsymbol{N}_1 = d\left(\boldsymbol{p}_{2D} - (\boldsymbol{x}_0 + \alpha\,(\boldsymbol{x}_1 - \boldsymbol{x}_0))\right) \qquad \text{(Equation 6)}$$

With two equations and two unknowns d and $\alpha$, the problem amounts to finding the roots of a quadratic polynomial on $\alpha$. Once $\alpha$ is determined, the second coordinate $\mu$ is computed using Equation 2 above. Thus, according to these embodimenst, the seamline space coordinates $\alpha$ and $\mu$ for any arbitrary node in a seamline segment can be determined.

4. Seam Application

Referring back to FIG. 3, once the relevant nodes are captured 304 by the corresponding seamline segments, the seam properties for the current seam can be applied 305 to the model. For example, in this step, the folding of the geometry according to the type of seam is applied to the garment model. To this end, in embodiments, reference frames or seam profiles are generated along the seamline for the current seam. These seam profiles define 2D spaces orthogonal to the seamline space that run across the seamline. For example, FIG. 6 illustrates a seam profile 630i in a fabric piece 601. Profile space 630i is illustrative as it may be generated on any point i along the seamline segment $\boldsymbol{p}(\alpha)$ a distance $\alpha$ from the origin of the segment. Profile space is a 2D space orthogonal to the seamlines space, which simplifies the folding operations for any node along the seamline. The same approach is taken for each segment in the seamline until the entire seamline for a given seam is processed. The origin 612i of a seam profile 630i a distance $\alpha$ from a first segment node 602a is located at $\boldsymbol{p}(\alpha)$ 612i, the x axis is aligned with the seamline normal $\boldsymbol{N}(\alpha)$ 615i, and the y axis points upwards (matching the z axis of the seamline space) 616i. Therefore, according to embodiments, a point 612i in seamline space with coordinates $(\alpha, \mu, h)$ has profile space coordinates $(\mu, h)$ in a seam profile 630i at $\alpha$. With this mapping, converting from seamline space to profile space becomes simple.

Once profile space is dfined according to these embodiments, folding operations can take place in profile space. For any node captured by a seamline and with seamline space coordinates $(\alpha, \mu, h)$, a seam profile at $\alpha$ can be generated and the node's seam profile coordinates $(\mu', h')$ given the folding required for the particular seam are computed. The seam profile focuses the folding operation on a slice of the seam across the seamline, reducing a 3D space problem to a 2D space, simplifying the manipulation of the node data. Given the large number of possible seam types, properly folding both sides of a seam may become a complex problem since seam sides can have arbitrarily complex topologies. For example, seam sides can be flat, homogeneous pieces of fabric if never seamed before, but as the modeling of the assembly process proceeds, seam sides can also be the result of one or multiple previous seaming operations. In this case, a seam side can already have multiple complex folds and many layers of fabric from different pieces with varying heights along and across the seam. Keeping track of these folds and layers can become a very complex endeavour.

According to another aspect of some embodiments, each side of a seam, before folding, may be treated as a flat plate with uniform thickness. This approach reduces each side of the seam to its centerline (h = 0) plus a thickness, akin to the treatment of thin plates in continuum mechanics. Treating and folding seam sides as plates with uniform thickness according to these embodiments provides at least two main advantages. First, the seam profiles become agnostic of the specific geometry (folds, layers, connectivity, etc.) within each side of the seam: only the centerline and the thickness become relevant. Second, this guarantees that if the geometry within the plates was intersection-free, the resulting folded geometry will also remain intersection-free. Seam profiles according to these embodiments become functions $\rho$ from $\mathbb{R}$ to $\mathbb{R}^2$ that map the flat centerline coordinate $\mu$ to the folded centerline coordinates ($\mu'$, $h'$). In order to account for the additional displacement due to the height $h$ along the thickness direction of a point at $\mu$, the normal $\eta$ to the function $\rho$ at $\mu$ may also be used. The seam profile then transforms the input position ($\mu$, $h$) on either side of the seam into its deformed, folded position ($\mu'$, h'):

$$(\mu', h') = \rho(\mu) + h\eta(\mu) \qquad \text{(Equation 7)}$$

Both $\rho$ and $\eta$ are parametric functions defined by the type of seam, and parameterized by the thickness of both plates.

Some examples of seam types and their respective $\rho$ functions in profile space are illustrated in FIG. 7. Each side of the seam has a different transformation, depending on the specific arrangement dictated by the seam type. For example, for seam type 2.02.01 (as defined in ISO 4916, Textiles -- Seam Types -- Classification And Terminology, incorporated herein by reference), the left side is folded onto itself and tucked over the right side. For seam type 2.04.06 (as defined in ISO 4916), both sides are folded onto themselves while clutched together, with the left side on top of the right side. In practice, $\rho$ can be represented as a piece-wise continuous set of parametric primitives (lines, arcs), or as parametric spline for more artistic direction, while $\eta$ can be derived from $\rho$.

As one of ordinary skill in the art will appreciate, while, according to some embodiments, seam sides may be treated as flat plates with uniform thickness at every seam profile, the thickness for the entire seam may not be uniform. To the contrary, height usually varies significantly as the seam traverses previously folded seams, and using a uniform thickness for the entire seam would produce noticeable gaps and other visual artifacts. However, even with this thickness variation, given that the seam runs continuously along the same set of fabric pieces, some level of continuity along the seam must remain in the model. Otherwise, the seam model would result in sudden changes in thickness from one profile to the next, resulting in unnatural jumps in the folded geometry of the garment.

According to embodiments, in order to compute the thicknesses along the seam, a heightmap is built by measuring the height along the seam. Specifically, a set of locations placed at regular intervals along the seam length $\alpha$ may be selected. The heightmap building process iterates over these locations and retrieves the previous and next locations $\alpha_a$ and $\alpha_b$, and finds the captured node within that interval (i.e. satisfying $\alpha_a \leq \alpha \leq \alpha_b$) with the largest thickness value $h + t$. Here t is the real fabric thickness of the node and depends on the type of fabric it is made of. This value can be used to sample the heightmap at that location. Then, when a seam profile is generated at any given point along the seam, its thickness is obtained with a simple linear interpolation of the two bounding height samples. To enforce continuity along the seam, the heightmap is smooth out until all gradients satisfy a given continuity threshold. The smoothing can be constrained to only allow increases in height, otherwise smoothed out thicknesses will decrease and result in geometry intersections during folding. In different embodiments, different fixed values may be used for the continuity threshold. Yet in other embodiements, the continuity threshold is made to dependent on the bending stiffness of the fabric. Other continuity threshold approaches may be used without departing from the teachings of this disclosure.

5. Stitch Computing

Referring back to FIG. 3, according to some embodiments, the modeled computation of the stitching for the given seam being processed may be performed 306 in seamline space, after the seam properties have been applied 305. For example, after the fabric pieces are folded according to the seam data 301a, the stitching identified in the seam data 301a for the current seam can be computed. As identified above, different stitch types have different number of threads that interlock with the fabric and themselves in a wide variety of ways. Accordingly, in some embodiments, to model the stitching for the current seam, each stitch thread is discretized as a set of nodes linked through linear 1D elements, akin to a mass-spring system. A node is then placed when the thread intersects the fabric due to a needle puncture, or when two or more threads interlock. This yields a manageable coarse representation of what may otherwise be a highly complex interleaving and intersecting set of continuous threads. Some of the smoothness can subsequently be recovered during the rendering process, when the resulting set of segments are converted into splines to exhibit a more natural curvature.

The discretized stitching threads are parametrized using ($\alpha$, $\mu$) coordinates in seamline space along the seam. Since, at this point of the process, fabric has been folded along the seam, threads usually traverse many layers of fabric each time the needle punctures the fabric. To find out the exact puncturing position on each layer, raycasting is used on the geometry around the puncturing coordinates ($\alpha$, $\mu$) to retrieve all the height coordinates $h$ where the needle intersects a layer of fabric. This process, performed in simline space, is highly simplified because the folded geometry is readily available on both sides of the seam as a local continuum and without requiring the tracking of each individual layer in the seam. Using this approach, a stitch node is placed at each layer intersection, moving from one needle punction to the next.

6. Node Claiming

Referring back to FIG. 3, once the seam has been applied 305 to all captured nodes along a given seam, for example, by folding the nodes in profile space, in some embodiments, their position in seamline space can be updated using their newly computed $\mu'$ and $h'$ coordinates. As a consequence of the seam application process, some nodes may have switched from one side of the seam to the other, and may fall inside a fabric piece belonging to the other side of the seam. If this is the case, the sign of the $\mu'$ coordinate can be simply inverted and the node can be reassigned to the corresponding seamline segment on the other seamline. This doesn't change the position of the node in seamline space. However, it effectively moves the node from one piece to the other in pattern space, changing its support and therefore which piece is now claiming the node. When we compute its position $\boldsymbol{p}_{2D}$ using Equation 2, the node will have switched pieces in pattern space.

Similar to what happens in the node capture process, if a node ends up moving beyond a previous seam, the seamline space of the previous seam can be used to compute the new position of the node in the foreign piece.

According to these embodiments, once all claiming relationships have been updated, the next seam may be similarly processed. Note that node claiming may be performed even before the stitch computation 306 process. Thus, in some embodiments, these two steps may happen in different order and yet in other embodiments they may take place in parallel to expedite the processing, such as in real-time computer modeling applications.

7. Pattern Space Optimizations

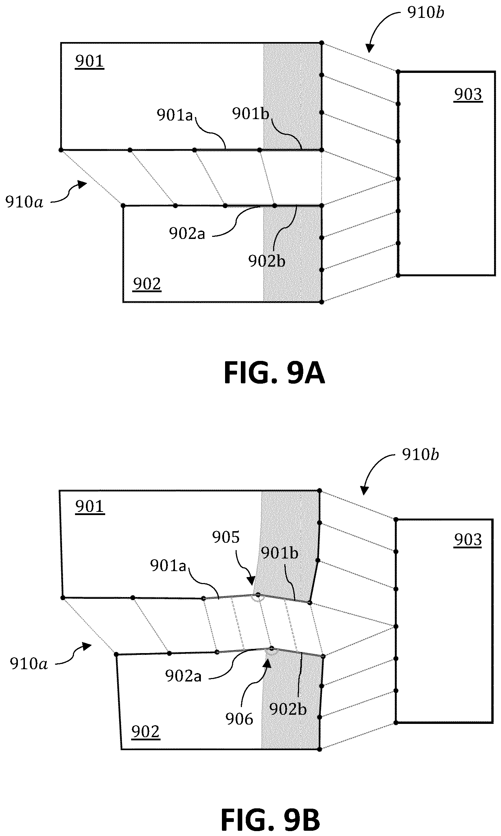

In a real-world sewing operation, when two pieces are sewn together, their seamlines are merged. If the sides are asymmetrical, i.e., if they have different lengths and/or shape prior to the sewing, this will result in a complex deformation of both pieces to accommodate the shared geometry along the seamline. According to embodiments of this disclosure, the use of seamline space for modeling seams handles these situations implicitly. However, when a seam affects several pieces that were previously sewn through one such asymmetrical seam, the deformation required to guarantee continuity between these pieces may be missing in some instances, leading to a discontinuity in the seamline space between chunks. FIG. 9A shows an example of a gathering that leads to this problematic configuration. The asymmetric seamlines of a previous seam 910a leads to discontinuities of the seamline space of a posterior seam 910b. Segments 901a-901b in fabric piece 901 and corresponding segments 902a-902b in fabric piece 902 are the segments of seam 910a that shoulb be symmetrical for seam 910b to span a well defined seamline space. However, as shown in FIG. 9A, segments 901a and 901b in piece 901 are larger than the corresponding segments in piece 902, segments 902a and 902b, on the other side of the seam. In some embodiments, to address this issue, an optional optimization may be performed on the geometry x of the pattern space as part of the pre-processing optimization step 303 of the process.

According to these embodiments, for each seam, the distances between its seamline segments and those of previous seams are computed, flagging the ones falling within the current seamline maximum capture offset and their corresponding coupled segments. These segments define the seamline sections that are required to be symmetrical in pattern-space, as they will be traversed by the seamline space of subsequent seams. For each pair of coupled seamline segments $s$, $\tilde{s}$, a function can be defined as $g(x) = \|s\| - \|\tilde{s}\|$. The functions $g(x)$ for coupled seamline segments are then group in the set $C_{norm}$. Similarly, for each two contiguous segments $s_a$, $s_b$, and their corresponding coupled segments $\tilde{s}_a$, $\tilde{s}_b$, another function can be defined as $h(x) = angle\ (s_a, s_b) - angle\ (\tilde{s}_a, \tilde{s}_b)$ and the functions $h(x)$ for the coupled seamline segments are then grouped in the set $C_{angle}$. An energy term $E_{shape}\ (x)$ can then be defined to measure deviation from the original pattern space geometry. Based on this energy term, the symmetry of the sides of the fabric pieces of the affected seams can be enforced, for example, by computing the following:

$$\min_{x} E_{shape}(x) \qquad\qquad \text{(Equation 8)}$$

$$\text{s.t.} \quad g_i(x) = 0, g_i \in C_{norm}$$

$$h_i(x) = 0, h_i \in C_{angle}$$

Maintaining this minimization function effectively enforces the symmetrical sides for the flagged sections while minimizing the pattern space distortion.

In some embodiments, the energy term $E_{shape}$ can be set to measure deviations in edge length and triangle area w.r.t. the original geometry, but more complex energy terms could be used in different embodiments. For example, in one embodiment, the energy term can account for different fabric mechanical properties. In practice, only small sections at the ends of some seamlines are likely to be flagged according to these embodiments and little deformation will likely be required. Using this approach, has been effective in tested implementations and the optimizations converged very rapidly. FIG. 9B illustrates the optimized pattern space version for the garment model of FIG. 9A. According to the pattern space optimization in these embodiments, all the seamline sections are computed so as to have matching segment lengths and angles on both sides of the seam while minimizing any distortion of the pieces geometry. For example, as compared to those in FIG. 9A, segments 901a and 901b now match in length with segments 902a and 902b, with the corresponding seamline sections in pieces 901 and 902 being angled with corresponding matching angles 905 and 906. Note also that this deformation does not affect the rest configuration of the final garment geometry during simulation, as this pattern space state of the model is used during the seam processing method.

8. Elevation to World Space

Referring back to FIG. 3, according to embodiments, once all seams have been modeled 308, each fabric piece in the garment model has a final list of claimed nodes. The positions of each claimed node $p_{2D}$ in pattern space falls inside the piece that has claimed it. In addition, every node that underwent computations due to the modeled seaming operation now has an $h$ coordinate specifying the height of the node along the normal direction.

In pattern space this normal direction is always the out-of-plane direction z. In world space, however, the pieces, without any of the seam allowances, are assembled together in a garment mesh and deformed through simulation until they reach their final draping position. Therefore, the normal direction in world space is a vector field that is orthogonal to the surface of the garment.

According to another aspect of embodiments of this disclosure, in order elevate the garment model with modeled seams to world space, the world space position of each pattern node is determined. For each node, the triangle containing its $p_{2D}$ position in pattern space is identified and its barycentric coordinates with respect to the identified triangle are computed. Then, the world space position of the node on the surface of the garment $p_{surf}$ may be computed using the barycentric coordinates and the position of the triangle in world space given by the 3D geometry input data 301d. To compute the final world space position $p_{3D}$ of the node, the node may be offset from $p_{surf}$ along the normal vector N field at $p_{surf}$ by the height coordinate $h$ of the node:

$$p_{3D} = p_{surf} + h\, N\, (p_{surf}) \qquad \text{(Equation 9)}$$

For nodes that do not have a height coordinate $h$, their world space position $p_{3D}$ in the input 3D geometry 301d is left unchainged because the lack of height implies that the node was not impacted by the seam processing, thus, there is no offset to apply.

As those of ordinary skill will understand from this disclosure, properly computing the vector N avoids geometric intersections when offseting nodes along the normal field. While a naive approach may be used in some embodiemnts, such approach will likely compute the normals at each vertex of the surface and use barycentric interpolation for the rest of the field, without any guarantees than an offsetted surface will not self-intersect. This may be workable in some embodiments but in other embodiments, to ensure a smooth and suitable field along the surface, a constrained optimization algorithm may be run on surface normals with constraints to prevent intersections within a large enough volume as further described below.

Referring back to FIG. 3, according to some embodiments, one or more 3D optimizations 309 may be performed before the ultimate generation of the 3D model 310 in world space. For example, in some embodiments, normal field optimizations may be provided similar to the seam normal optimizations that may be performed in seamline space, but in a 3D setting. According to these embodiments, a conservative limit for each triangle in the world space may be defined by taking d as the minimum distance between each of the triangle vertices and their opposing edge, $h_{max}$ as the maximum

$$\theta_{max} = 0.5\, \frac{d}{h_{max}}$$

absolute height coordinate of the nodes claimed by it, and computing . Then, a function may be dfined as f(x) = $acos(Ni \cdot Nj) - \theta_{max}$ for the normals of every pair of vertices $x_i$ , $x_j$ in the triangle and group them in the set C.

According to these embodiments, the set C may be enforced while deviating as little as possible from the reference normals $\overline{N}$ of the surface vertices, defined through classic averaging of the normals of incident triangles, for example based on the following Equation:

$$\min_{N} \sum_i \|N_i - \overline{N}_i\|^2 \qquad \text{(Equation 10)}$$

$$\text{s.t. } f(\boldsymbol{N}) < 0, f(\boldsymbol{N}) \in C$$

In some embodiments, many of the constraints may be redundant because two triangles that share an edge will likely impose different angle constraints. In these instances, the most restrictive constrains may be used.

According to another aspect of some embodiments, garment ironing can also be modeled. In physical garment assembly processes, most of the seams are ironed right after being sewn together to make sure the folded fabric stays as flat as possible, thus avoiding visual and tactile discomfort. As such, ironing strongly influences the final appearance of the seam and can prevent it from unfolding.

In some embodiments, this ironing process may be modeled by reproducing the plastic deformation due to ironing using the folded state of the seam as rest state during simulation. In this embodiments, seam operations may be performed before elevating the resulting geometry to world space. This inherently dissociates seam deformation from mesh deformation, which would not be workable if working directly in world space; seam bending and mesh bending would not be separable. According to these embodiments, all the deformations that appear in seamline space are exclusively due to the seam modeling.

In addition, while the geometry produced by the seaming procedure according to this disclosure is largely intersection-free and ready to be simulated, in some instances it can have some amounts of residual deformation. This deformation can appear for different reasons: asymetric seams, stretched fabrics, gatherings, etc. It should be noted that most of these deformations are also present in physically assembled garments as they are a natural part of the seaming process in real life. For example, when seaming together asymetrics seams, the seamster needs to be manually constrain (stretch, compress or bend) one or both sides of the seam to match the other side before folding and stitching. In some embodiments, this residual deformations may be treated as elastic deformations and may let the first steps of the simulation relax away this stress. Many interesting shapes and mechanical behaviors emerge naturally from this process, matching real world seam behavior.

The foregoing description of the embodiments has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof. These modules may be implemented in server-based systems interacting with client systems over a computer network, such as the Internet, over which the results obtained with the modules are communicated to the client systems for output to users. For example, in computer graphics applications, realistic graphics with modeled garments using the approaches described in this disclosure are computed at the servers and communicated to client systems for display, for example as computer encoded video frames. Alternatively, the modules may be implemented in client systems, for example, in design applications or client-based graphics applications, such as for example computer gaming applications.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability. Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following.

**REFERENCES**

The following references are incorporated herein for all purposes:

J. Chung. 1999. The effect of assembly methods of a garment on fabric drape. Ph.D. Dissertation. Institute of Textiles and Clothing, The Hong Kong Polytechnic University.

JL Hu and Siuping Chung. 2000. Bending Behavior of Woven Fabrics with Vertical Seams. Textile Research Journal 70 (02 2000), 148-153.

J. Hu, S. Chung, and M. Lo. 1997. Effect of seams on fabric drape. International Journal of Clothing Science and Technology 9 (3 1997), 220-227.

Liang Hu, Jinlianand Ma, George Baciu, Wingo Sai-Keung Wong, and Weiyuan Zhang. 2006. Modelling Multi-layer Seam Puckering. Textile Research Journal 76, 9 (2006), 665-673.

S. Inui, H. Okabe, and T. Yamaraka. 2001. Simulation of seam pucker on two strips of fabric sewn together. International Journal of Clothing Science and Technology 13 (02 2001), 53-64.

S. Kawabatra. 1980. The Standardization and Analysis of Hand Evaluation. The Textile Machinery Society Japan.

Liang Ma, Jinlian Hu, and George Baciu. 2006. Generating Seams and Wrinkles for Virtual Clothing. In Proceedings of the 2006 ACM International Conference on Virtual Reality Continuum and Its Applications (VRCIA). 205-211.

V. Masteikaite. 1997. Seam stiffness evaluation. In Proceedings of IMCEP. 114-121. Juan Montes, Bernhard Thomaszewski, Sudhir Mudur, and Tiberiu Popa. 2020. Computational Design of Skintight Clothing. ACM Transactions on Graphics (Proceedings of SIGGRAPH) (2020).

Fatemeh Mousazadegan, Siamak Saharkhiz, and Masoud Latifi. 2012. Prediction of tension seam pucker formation by finite-element model. International Journal of Clothing Science and Technology 24 (06 2012), 129-140.

Simon Pabst, Sybille Krzywinski, Andrea Schenk, and Bernhard Thomaszewski. 2008. Seams and Bending in Cloth Simulation. In Workshop in Virtual Reality Interactions and Physical Simulation (VRIPHYS). 31-38.

F.T. Peirce. 1930. The "Handle" of cloth as a Measurable Quantity. Journal of the Textile Institute Transactions 21, 9 (1930), 377-416.

Xavier Provot. 1995. Deformation Constraints in a Mass-Spring Model to Describe Rigid Cloth Behaviour. In Proceedings of Graphics Interface (GI). 147-154.

Scott Roland, Mathew D. Janda, and Charles Lowry. 2015. Implementation of Modeling and Simulation of Textile Seam and Joints for Parachute Design Applications. In Aerodynamic Decelerator Systems Technology Conferences.

A. Schenk, Manal Seif, and H. Rödel. 2006. Influence of seam on the bending stiffness of textile fabrics. Mell Textilber 87 (11 2006).

Yunchu Yang. 2014. Investigating Seamed Woven Fabric Drape Using Experimental and Virtual Approaches. Fibers and Polymers 15 (10 2014), 2217-2224.

## Claims

1. A method for computer-based modeling of a garment comprising:

   receiving input model data for a garment comprising seam data and geometry data describing the physical properties of the garment, the seam data including data describing the physical construction of seams to be used in assembling the garment;
   processing the geometry data based on the seam data by mapping the seam data into geometric operations applied to the geometry data;
   generating three-dimensional geometry data corresponding to a simulation of the garment, the three-dimensional geometry data representing the seams on the garment and effects of the seams on a drape of the simulated garment; and
   simulating the garment in a computer system based on the generated three-dimensional geometry data.

2. The method of claim 1, wherein the geometry data describing the physical properties of the garment further comprises a representation of a plurality of fabric panels including seam allowance sections.

3. The method of claim 1, wherein the seam data further comprises a seam type and a stitch type for at least one seam to be used in assembling the garment.

4. The method of claim 1, wherein the geometric operations include an optimization operation.

5. The method of claim 1, wherein the geometric operations include a procedural geometric transformation applied to the geometry data based on each of the seams to be used in assemblig the garment.

6. The method of claim 5, wherein the procedural geometric transformations are applied to the geometry data based on a seam order specified in the seam data.

7. The method of claim 2, wherein the geometric operations include a transformation of geometry data for at least one seamline of a pair of adjoining fabric panels based on a seam type identified in the seam data.

8. The method of claim 7, wherein the geometric operations further include a transformation of the geometry data for the seamline of the pair of adjoining fabric panels based on a stitch type identified in the seam data.

9. The method of claim 4, wherein the optimization operation comprises an optimization of 2-dimensional geometry data representative of a set of fabric panels in the geometry data describing the physical properties of the garment, the optimization of the 2-dimensional geometry data simulating the stretching of a first fabric panel along a first seamline to match a corresponding second seamline in a second fabric panel that is longer than the first seamline.

10. The method of claim 4, wherein the optimization operation comprises an optimization of 2-dimensional geometry data representative of a normal line in a fabric seam allowance section of a fabric panel that is perpendicular to a seamline in the fabric panel so as to prevent the normal line from crossing a second normal line in the fabric seam allowance section of the fabric panel.

11. The method of claim 1, wherein the geometric operations further comprise defining a seamline based on an identification of a fabric panel and a segment identifier corresponding to a segment in the fabric panel and further defining a set of 2-dimensional coordinates to uniquely identify any point along the seamline.

12. A method for computer-based modeling of a garment comprising:

receiving input model data for a garment comprising seam data and geometry data describing the physical properties of the garment, the geometry data comprising a representation of a plurality of fabric panels including seam allowance sections and the seam data including a seam type and a stitch type for each seam to be used in assembling the plurality of panels to generate the garment;
processing the geometry data based on the seam data based on a set of geometric operations applied to the geometry data for the plurality of fabric panels to produce garment model representations comprising seams made of modeled layers of fabric material from the seam allowance areas folded and stitched based on the seam type and the stitch type in the seam data;
generating three-dimensional geometry data based on the garment model representations; and
simulating the garment on a computer system based on the generated three-dimensional geometry data.

13. The method of claim 12, wherein the geometric operations include an optimization operation.

14. The method of claim 12, wherein the geometric operations include a procedural geometric transformation applied to the geometry data for the plurality of fabric panels based on each seam to be used in assembling the plurality of panels.

15. The method of claim 14, wherein the procedural geometric transformations are applied to the geometry data for the plurality of fabric panels based on a seam order specified in the seam data.

16. The method of claim 12, wherein the geometric operations include a transformation of the geometry data for at least one seamline and one seam allowance area of a pair of adjoining fabric panels of the plurality of fabric panels to generate the modeled layers of fabric material based on the seam type and the stitch type in the seam data.

17. The method of claim 13, wherein the optimization operation comprises an optimization of 2-dimensional geometry data for the representation of the plurality of fabric panels, the optimization of the 2-dimensional geometry data simulating the stretching of a first fabric panel along a first seamline to match a corresponding second seamline in a second fabric panel that is longer than the first seamline.

18. The method of claim 13, wherein the optimization operation comprises an optimization of 2-dimensional geometry data for the representation of the plurality of fabric panels that is representative of a normal line in a fabric seam allowance section of a fabric panel that is perpendicular to a seamline in the fabric panel so as to prevent the normal line from crossing a second normal line in the fabric seam allowance section of the fabric panel.

19. The method of claim 12, wherein the geometric operations further comprise defining a seamline based on an identification of a fabric panel of the pularilty of fabric panels and a segment identifier corresponding to a segment in the fabric panel and further defining a set of 2-dimensional coordinates to uniquely identify any point along the seamline.

20. A computer system for computer-based modeling of a garment comprising:

a data storage configured to store model data for a garment comprising seam data and geometry data describing the physical properties of the garment, the seam data including data describing the physical construction of seams to be used in assembling the garment; and
one or more processors configured to:

process the geometry data based on the seam data by mapping the seam data into geometric operations applied to the geometry data;
generate three-dimensional geometry data corresponding to a simulation of the garment, the three-dimensional geometry data representing the seams on the garment and effects of the seams on a drape of the simulated garment; and
simulate the garment in the computer system based on the generated three-dimensional geometry data.

**FIG. 1A**

*(PRIOR ART)*

**FIG. 1B**

*(PRIOR ART)*

**FIG. 2A**

**FIG. 2B**

**FIG. 3**

**FIG. 4**

**FIG. 5A**

**FIG. 5B**

FIG. 6

FIG. 7

FIG. 8

**FIG. 9A**

**FIG. 9B**

## INTERNATIONAL SEARCH REPORT

| International application No |
|---|
| PCT/ES2020/070617 |

**A. CLASSIFICATION OF SUBJECT MATTER**
INV. G06T19/20    G06T17/00
ADD.

According to International Patent Classification (IPC) or to both national classification and IPC

**B. FIELDS SEARCHED**

Minimum documentation searched (classification system followed by classification symbols)
G06T

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
|---|---|---|
| X | EP 2 808 811 A1 (DASSAULT SYSTÈMES [FR]) 3 December 2014 (2014-12-03) | 1,20 |
| Y | abstract; figures 3-10 paragraphs [0017] - [0020], [0054] - [0068] ----- | 2 |
| Y | KR 102 130 252 B1 (LEE HO-HYUN [KR]) 6 July 2020 (2020-07-06) paragraphs [0080], [0081] & US 2021/056743 A1 (LEE HO-HYUN [KR]) 25 February 2021 (2021-02-25) ----- | 2 |

☐ Further documents are listed in the continuation of Box C.    ☒ See patent family annex.

* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 30 July 2021 | 04/10/2021 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Almeida Garcia, B |

Form PCT/ISA/210 (second sheet) (April 2005)

## INTERNATIONAL SEARCH REPORT

International application No.
PCT/ES2020/070617

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such
   an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

see additional sheet

1. ☐ As all required additional search fees were timely paid by the applicant, this international search report covers all searchable
   claims.

2. ☐ As all searchable claims could be searched without effort justifying an additional fees, this Authority did not invite payment of
   additional fees.

3. ☐ As only some of the required additional search fees were timely paid by the applicant, this international search report covers
   only those claims for which fees were paid, specifically claims Nos.:

4. ☒ No required additional search fees were timely paid by the applicant. Consequently, this international search report is
   restricted to the invention first mentioned in the claims; it is covered by claims Nos.:

   1, 2, 20(completely); 12-19(partially)

**Remark on Protest**    ☐ The additional search fees were accompanied by the applicant's protest and, where applicable, the
payment of a protest fee.

☐ The additional search fees were accompanied by the applicant's protest but the applicable protest
fee was not paid within the time limit specified in the invitation.

☐ No protest accompanied the payment of additional search fees.

Form PCT/ISA/210 (continuation of first sheet (2)) (April 2005)

International Application No. PCT/ ES2020/ 070617

**FURTHER INFORMATION CONTINUED FROM    PCT/ISA/  210**

This International Searching Authority found multiple (groups of) inventions in this international application, as follows:

1. claims: 1, 2, 20(completely); 12-19(partially)

    Garment modelling with seam allowance sections.
    ---

2. claims: 3, 7, 8(completely); 12-19(partially)

    Garment modelling using seam type and stitch type
    ---

3. claims: 4, 9, 10(completely); 13, 17, 18(partially)

    Garment modelling using an optimization operation
    ---

4. claims: 5, 6(completely); 14, 15(partially)

    Garment modelling with a procedural geometric transformation based on each of the seams
    ---

5. claims: 11(completely); 19(partially)

    Garment modelling using a segment identifier
    ---

## INTERNATIONAL SEARCH REPORT

Information on patent family members

| | |
|---|---|
| International application No | |
| PCT/ES2020/070617 | |

| Patent document cited in search report | | | Publication date | Patent family member(s) | | | Publication date |
|---|---|---|---|---|---|---|---|
| EP 2808811 | A1 | | 03-12-2014 | CA | 2853030 | A1 | 30-11-2014 |
| | | | | CN | 104239601 | A | 24-12-2014 |
| | | | | EP | 2808811 | A1 | 03-12-2014 |
| | | | | JP | 6469971 | B2 | 13-02-2019 |
| | | | | JP | 2014235748 | A | 15-12-2014 |
| | | | | KR | 20140141499 | A | 10-12-2014 |
| | | | | US | 2014358495 | A1 | 04-12-2014 |
| KR 102130252 | B1 | | 06-07-2020 | KR | 102130252 | B1 | 06-07-2020 |
| | | | | US | 2021056743 | A1 | 25-02-2021 |

Form PCT/ISA/210 (patent family annex) (April 2005)

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- The effect of assembly methods of a garment on fabric drape. **J. CHUNG.** Ph.D. Dissertation. Institute of Textiles and Clothing, The Hong Kong Polytechnic University, 1999
- **JL HU ; SIUPING CHUNG.** Bending Behavior of Woven Fabrics with Vertical Seams. *Textile Research Journal,* February 2000, vol. 70, 148-153
- **J. HU ; S. CHUNG ; M. LO.** Effect of seams on fabric drape. *International Journal of Clothing Science and Technology,* 1997, vol. 9 (3), 220-227
- **LIANG HU ; JINLIANAND MA ; GEORGE BACIU ; WINGO SAI-KEUNG WONG ; WEIYUAN ZHANG.** Modelling Multi-layer Seam Puckering. *Textile Research Journal,* 2006, vol. 76 (9), 665-673
- **S. INUI ; H. OKABE ; T. YAMARAKA.** Simulation of seam pucker on two strips of fabric sewn together. *International Journal of Clothing Science and Technology,* February 2001, vol. 13, 53-64
- **S. KAWABATRA.** The Standardization and Analysis of Hand Evaluation. The Textile Machinery Society Japan, 1980
- **LIANG MA ; JINLIAN HU ; GEORGE BACIU.** Generating Seams and Wrinkles for Virtual Clothing. *Proceedings of the 2006 ACM International Conference on Virtual Reality Continuum and Its Applications (VRCIA,* 2006, 205-211
- **V. MASTEIKAITE.** Seam stiffness evaluation. *Proceedings of IMCEP,* 1997, 114-121
- **JUAN MONTES ; BERNHARD THOMASZEWSKI ; SUDHIR MUDUR ; TIBERIU POPA.** Computational Design of Skintight Clothing. *ACM Transactions on Graphics (Proceedings of SIGGRAPH),* 2020
- **FATEMEH MOUSAZADEGAN ; SIAMAK SAHARKHIZ ; MASOUD LATIFI.** Prediction of tension seam pucker formation by finite-element model. *International Journal of Clothing Science and Technology,* June 2012, vol. 24, 129-140
- **SIMON PABST ; SYBILLE KRZYWINSKI ; ANDREA SCHENK ; BERNHARD THOMASZEWSKI.** Seams and Bending in Cloth Simulation. *Workshop in Virtual Reality Interactions and Physical Simulation (VRIPHYS),* 2008, 31-38
- **F.T. PEIRCE.** The "Handle" of cloth as a Measurable Quantity. *Journal of the Textile Institute Transactions,* 1930, vol. 21 (9), 377-416
- **XAVIER PROVOT.** Deformation Constraints in a Mass-Spring Model to Describe Rigid Cloth Behaviour. *Proceedings of Graphics Interface (GI),* 1995, 147-154
- **SCOTT ROLAND ; MATHEW D. JANDA ; CHARLES LOWRY.** Implementation of Modeling and Simulation of Textile Seam and Joints for Parachute Design Applications. *Aerodynamic Decelerator Systems Technology Conferences,* 2015
- **A. SCHENK ; MANAL SEIF ; H. RÖDEL.** Influence of seam on the bending stiffness of textile fabrics. *Mell Textilber,* November 2006, vol. 87
- **YUNCHU YANG.** 2014. Investigating Seamed Woven Fabric Drape Using Experimental and Virtual Approaches. *Fibers and Polymers,* October 2014, vol. 15, 2217-2224